# EUROPEAN PATENT APPLICATION

(11) **EP 2 685 179 A1**
(43) Date of publication of application: **15.01.2014**
(21) Application number: 12005196.6
(22) Date of filing: 14.07.2012
(51) Int. Cl.: F24J 2/38, G05D 3/10, H02J 3/38

(54) **Apparatus and method for controlling a tracker system**

(71) Applicant: Danfoss Customised Power Electronics A/S, 6300 Graasten (DK)
(72) Inventor: Baekhoejkjaer, Soeren, 24955 Harrislee (DE)
(74) Representative: Knoblauch, Andreas

(57) **Abstract**

Controlling apparatus for a solar power generator, comprising a direction tracker controller allowing the adjustment of the orientation of at least one photo voltaic array towards a desired direction, an input from the direction tracker controller to an inverter and an output from the inverter to the direction tracker controller.

The direction tracker controller comprises a means to send start and stop requests to the inverter and the voltage and/or the current and/or the power from the at least one photo voltaic array can be measured by the inverter.

A method of operating such a controlling apparatus for a solar power generator, and an inverter suitable for enabling said method and a solar generator comprising said controlling apparatus.

## Description

### Technical Field

The present invention relates to a controlling apparatus for a solar power generator, wherein said controlling apparatus comprises a direction tracker controller allowing the adjustment of the orientation of at least one photo voltaic array towards a desired direction, an input from the direction tracker controller to an inverter and an output from the inverter to the direction tracker controller. The invention further relates to a method to operate such a controlling apparatus. The invention also relates to a solar power generator, comprising such a controlling apparatus.

### Background

Electrical power can be generated from a number of sources such as burning of fossil fuels, nuclear power, water or wind power and from solar power. The fraction of power generated by solar power is steadily growing, in part due to optimization of the power output of individual solar power generators.

Solar power generators face the difficulty that the sun is changing its position over the course of each day and additionally over the course of each year. In particular for photo voltaic (PV) arrays the amount of power generated is highly dependent on the angle at which the light hits the solar panels.

Therefore, modern PV arrays often include a so called "direction tracker" that allows to keep the PV array aligned in the direction of the sun to optimize the power output.

Such a direction tracker system is for example shown in WO 2009/091339 A2. The direction tracker comprises a direction tracker controller, motors and the mechanical alignment system as well as one or several ways to determine the correct alignment. The latter may include a clock based system, using GPS location and time data to target the PV array at the expected position of the sun. Similarly one may use magnetic field sensors and compare to expected data to determine the correct alignment of the PV array. A third and more direct approach uses a light sensor attached to the solar panel that allows to fine tune the alignment of the solar panels towards the sun. The solar panel is rotated back and forth until the maximum of light signal is found.

Clock based direction tracker systems are relatively stable and can run with a good alignment for an extended period of time. Light sensor based systems are more accurate but require the solar panel to go in and out of alignment. Thus clock based systems are often used for the regular direction tracker operation and the light sensor is only used to correct small misalignments. Such misalignments are inevitable due to drift caused for example by the mechanical components of the direction tracker system.

Another way of optimizing the power output of a solar power generator is to include a so called maximum power point tracker (MPPT). A method to operate such an MPPT is for example disclosed in WO 2011/100968 A2. Since solar power generators cannot provide a constant power output, there would be additional losses of energy in the conversion from directed current to alternating current. Thus solar power generators now often comprise an MPPT that allows changing the input resistance of the inverter. This way, the inverter can present the solar power generator with the optimal load to extract the maximum of electrical power. This has the side effect that the voltage and the current from the PV array are no longer a direct function of the incoming light intensity. This is further complicated by the fact that the output voltage is not only influenced by the incoming light intensity but also by the temperature of the PV array.

Another complication arises if parts of a PV array are covered by a shadow. In this case, the MPPT may then not even operate at the true maximum power point (as explained in WO 2011/100968 A2).

In solar generators without an MPPT the voltage, current, and power from the PV array are still not necessarily proportional to the incoming light intensity. This can, for example, be caused by a varying load on the AC output of the inverter or by temperature changes in the PV array.

In EP 21 00 199 B1 the direction tracker controller is integrated into the inverter. This reduces the number of independent components.

The mentioned optimization methods improve the power output of a solar power generator but also add additional equipment and parts to the plant. Thus, they increase the cost and the need for maintenance.

Therefore, an object of the invention is to provide an improved controlling apparatus for a direction tracker system of a solar power generator and a corresponding method to control a solar power generator comprising a direction tracker.

### Summary of Invention

According to the invention, the above object is achieved by dispensing with the light sensor of the PV array and using the PV array itself as a light sensor.

As explained in the introduction, the voltage, current, and power of a PV array are not direct functions of the incoming light intensity. Thus the PV array cannot be reliably used as a light sensor, especially if the solar power generator comprises an MPPT.

Therefore, according to the invention, the direction tracker controller can send a signal to start the calibration to the inverter through an input. Then the inverter enters a mode where the output signal at the output of the inverter is directly related to the voltage and/or the current and/or the power from the PV array. This can for example be achieved by holding the input resistance constant in the inverter or, if applicable, by using the MPPT functionality as explained in more detail later. Afterwards, the voltage and/or the current and/or the power in the at least one PV array can be measured. The measured voltage and/or current and/or power data is then sent to the direction tracker controller. The direction tracker controller will then adjust the orientation of the at least one PV array and monitor the change in voltage and/or current and/or power as transmitted from the inverter.

The calibration will end once a pre-determined requirement is met and the direction tracker controller will send a signal to stop the calibration to the inverter. The inverter will then resume the normal operation.

In a preferred embodiment, the inverter comprises means to send the measured voltage and/or current and/or power data that are measured in the inverter to the direction tracker controller via a data link. The measured voltage and/or current and/or power data that is sent from the inverter to the direction tracker controller, allows the direction tracker controller to adjust the orientation of the at least one PV array. The data link between the inverter and the direction tracker controller may be one of the following types: Ethernet, RS-232, RS-422, RS-423, RS-485. The input from the direction tracker controller to the inverter and the output from the inverter to the direction tracker controller can also be combined into the data link. Combining the input from the direction tracker controller to the inverter and the output from the inverter to the direction tracker controller into the data link reduces the number of necessary cable connections.

According to yet another preferred embodiment, the input current from the at least one PV array to the inverter is short circuited. The short circuited current in the PV array can then be used as a measure to determine the incident light intensity on the at least one PV array during the calibration. The input from the at least one PV array to the inverter can be short circuited by a dedicated switch in the inverter. The dedicated switch can be a mechanical relay or an electronic switch such as a transistor, SCR, Triac, MOSFET, IGBT.

In a preferred embodiment, the inverter has an input stage which is a voltage converter. Such a voltage converter is a suitable switching component across the input from the PV array.

According to yet another preferred embodiment, the inverter comprises means to keep the voltage constant across the at least one PV array. When the voltage is kept constant across the PV array input, the current flowing through the input from the PV array is related to the intensity of light that is incident on the PV array. Since the current is not short circuited in this embodiment, the power provided by the at least one PV array can be used to power the inverter. Thus, it is not necessary to draw power from the main distribution network during calibration. This requires that the voltage is appropriately chosen, preferably from a value that is in the range of normal operation.

In a preferred embodiment the inverter comprises an MPPT and the direction tracker controller comprises a means to send start and stop requests to the MPPT. If the inverter comprises an MPPT, the normal operation of the MPPT must be deactivated during calibration. This allows for a clear dependence of the voltage and/or the current and/or the power on the incoming light intensity on the at least one PV array.

Preferably the MPPT is used to keep the voltage across the at least one PV array constant. Using an already present MPPT functionality to keep the voltage constant means that there is no need to install further hardware to achieve a constant voltage across the at least one PV array.

### Brief description of the drawings

Preferred embodiments of the invention are in the following explained with reference to the accompanying Figs., wherein
- Fig. 1: shows a flow chart of the method for the direction tracker controller according to a first and second embodiment of the invention.
- Fig. 2: shows a flow chart of the method for the inverter, according to the first embodiment of the invention.
- Fig. 3: shows a flow chart of the method for the inverter according to the second embodiment of the invention.
- Fig. 4: shows the principal components of a solar power generator using the invention.
- Fig. 5: shows the principal components of a solar power generator with a regular tracking system, comprising a dedicated light sensor.

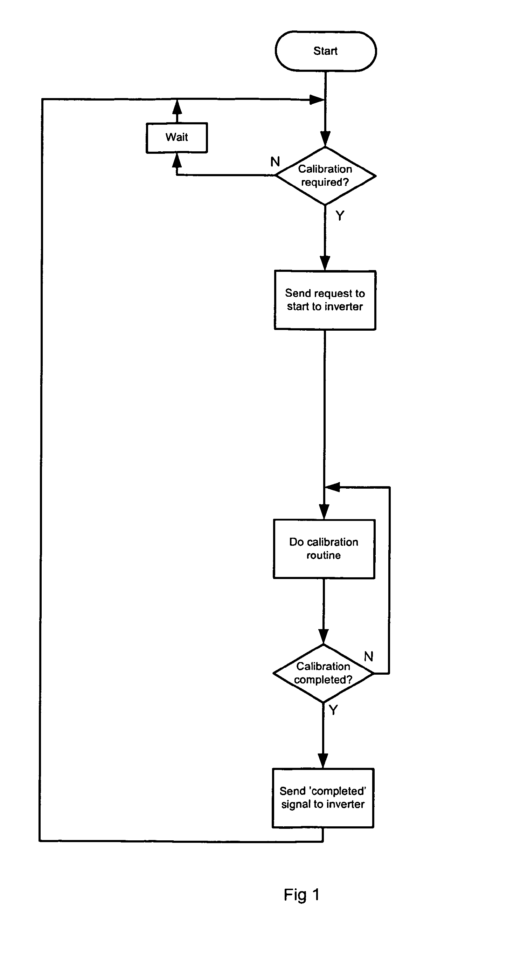

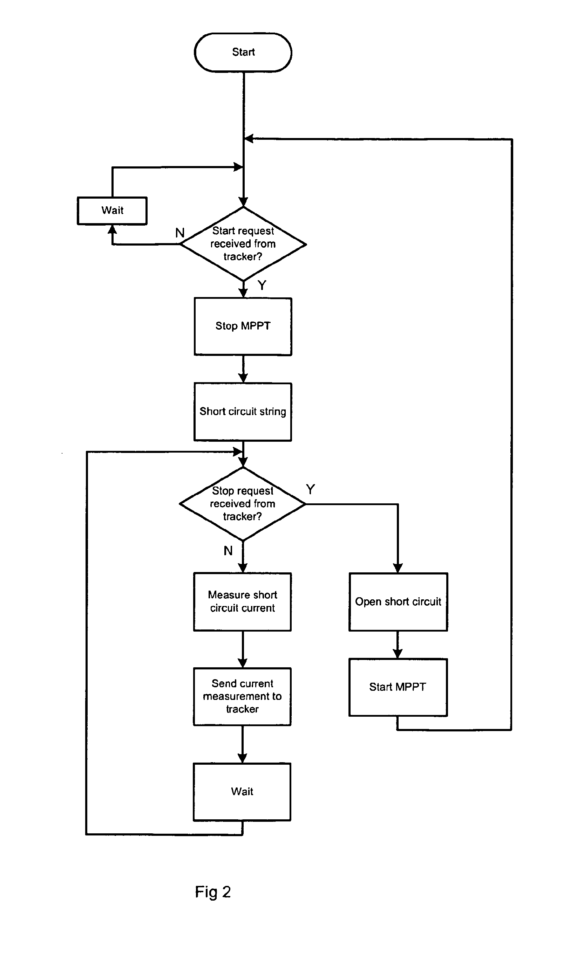

Figs. 1 and 2 combined show a first embodiment of the method according to the invention.

Fig. 1 depicts how a direction tracker calibration routine for a solar power generator 1 is performed as seen from the direction tracker controller 2. Unless a requirement is met, the direction tracker controller 2 333stays in normal operation mode. For example, the tracking can be performed with a clock based method that calculates the direction of the sun from time and position information. During this normal operation mode, the direction tracker controller waits until a calibration is needed. This may for example be the case after a pre-determined time interval or if a misalignment has been determined by other means.

Once a calibration is required, the direction tracker controller 2 sends a request to the inverter 3 by means of a data link 4. Then the calibration routine is performed for a predetermined duration or until the alignment of the photovoltaic array 5 towards the sun has been achieved with a sufficient precision, for example with an angular deviation of less than one degree. When the calibration is completed, a signal is sent to the inverter to resume normal operation.

Fig. 2 shows a first embodiment of the method according to the invention as seen from the inverter 3. If no calibration signal is received, the inverter 3 performs the normal operation. This may include adjusting the input resistance for the current coming from the PV array 5 via the DC input 6 with the help of a maximum power point tracker (MPPT).

Once a start request for the calibration is received from the direction tracker controller 2, any MPPT that is part of the inverter is stopped from normal operation.

Then the current supplied by the PV array is short circuited. This can for example be done by a dedicated switch across the input from the PV array 5 or by commanding the MPPT to reduce the input resistance to essentially Zero Ω.

Until there is a stop request received from the direction tracker controller 2, the inverter 3 will then measure the short circuited current. The current measurements are then sent to the direction tracker controller 2 by means of the data link 4. The direction tracker controller 2 can then use the current measurements to perform the alignment of the PV array 5.

Once a stop request is received from the direction tracker controller 2, the shorting switch is opened and, if applicable, the MPPT is restarted for normal operation.

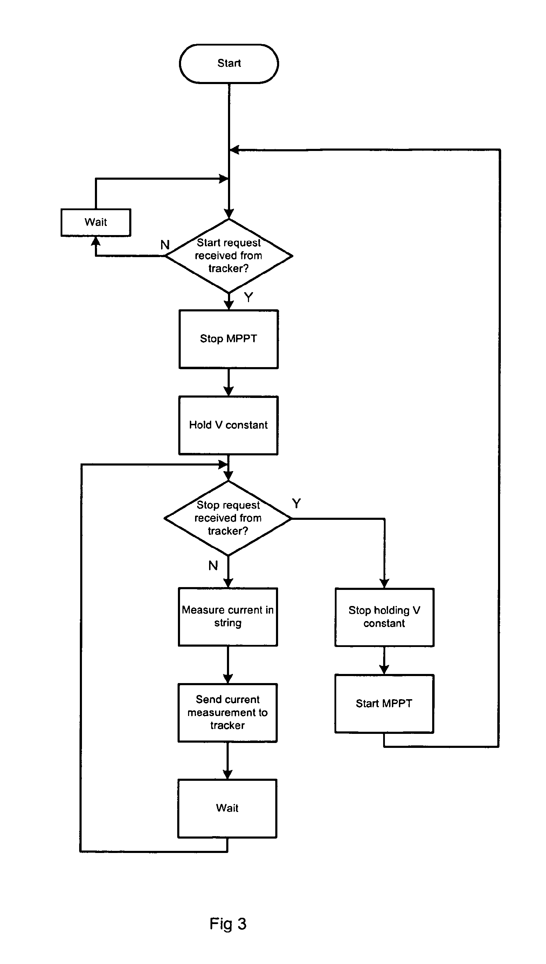

Figs. 1 and 3 combined show a second embodiment of the method, according to the invention.

Fig. 3 shows a second embodiment of the method, according to the invention, as seen from the inverter 3. As long as no calibration signal is received, the inverter 3 performs the normal operation. Again, this may include adjusting the input resistance for the current coming from the PV array 5 via the DC input 6 with the help of an MPPT.

Once a start request for the calibration is received from the direction tracker controller 2, any present MPPT is stopped from normal operation.

Then the voltage is kept constant across the DC input 6, coming from the PV array 5. This can preferably be done with the functionality of the MPPT if one is at hand. Alternatively the input resistance can be held constant at the inverter 3.

Until there is a stop request received from the direction tracker controller 2, the inverter 3 will measure the current supplied by the PV array 5 via the DC input 6. These measurements are sent to the direction tracker controller 2 by means of the data link 4. The direction tracker controller 2 uses these measurements to perform the alignment of the PV array 5. Once a stop request is received from the direction tracker controller 2, the voltage is no longer kept constant and, if applicable, the MPPT is restarted for normal operation.

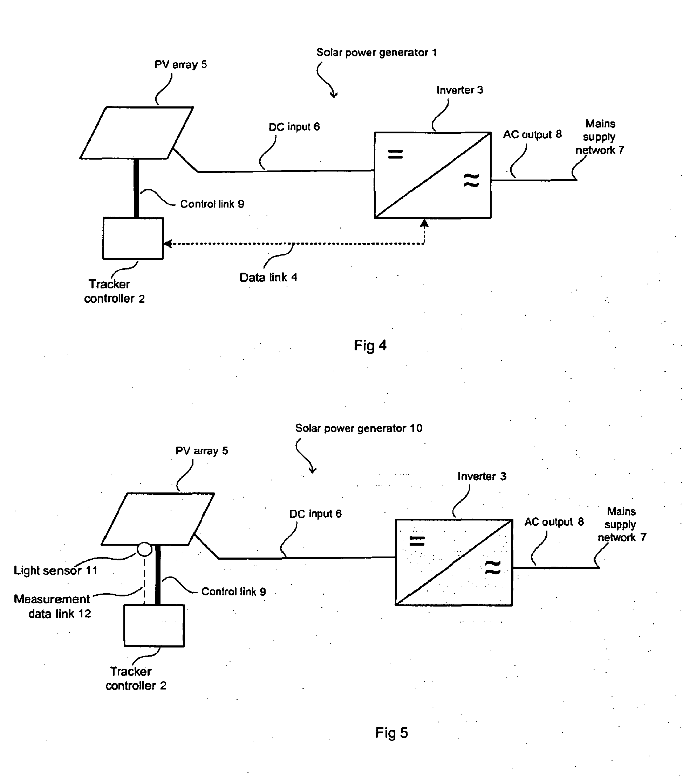

Fig. 4 shows a solar power generator 1, according to the invention, comprising a PV array 5, an inverter 3 and a direction tracker controller 2. The PV array 5 is connected to the inverter 3 via a DC input 6. The inverter is also connected to the main supply network 7 by means of an AC output 8. The direction tracker controller 2 is connected to the inverter 3 preferably by a single data link 4. The direction tracker controller 2 is also connected to the PV array 5 via a control link 9 that allows changing the alignment of the PV array 5.

Fig. 5 shows a prior art solar power generator 10. This solar power generator 10 uses a dedicated light sensor 11 on the PV array 5 that is connected to the direction tracker controller 2 by means of a measurement data link 12. This dedicated light sensor means additional cost and maintenance as compared to the current invention. The prior art does also not exhibit a data link 4 from the direction tracker controller 2 to the inverter 3.

## Claims

1. A controlling apparatus for a solar power generator (1), wherein said controlling apparatus comprises a direction tracker controller (2) allowing the adjustment of the orientation of at least one photo voltaic array (5) towards a desired direction, an input from the direction tracker controller (2) to an inverter (3) and an output from the inverter (3) to the direction tracker controller (2), **characterized in that** the direction tracker controller (2) comprises a means to send start and stop requests to the inverter (3) and wherein the voltage and/or the current and/or the power from the at least one photo voltaic array (5) can be measured by the inverter (3).

2. The controlling apparatus according to claim 1, wherein the inverter (3) comprises means to send the measured voltage and/or current and/or power data via a data link (4) to the direction tracker controller (2).

3. The controlling apparatus according to claim 1 or 2, wherein the input from the at least one photo voltaic array (5) to the inverter (3) can be short circuited.

4. The controlling apparatus according to any of claims 1 to 3, wherein the inverter (3) has an input stage which is a voltage converter.

5. The controlling apparatus according to any of claims 1 to 4, wherein the inverter (3) comprises means to keep the voltage constant across the at least one photo voltaic array (5).

6. The controlling apparatus according to any of claims 1 to 5, wherein the inverter (3) comprises a maximum power point tracker and wherein the direction tracker controller (2) comprises a means to send start and stop requests to the maximum power point tracker.

7. The controlling apparatus according to claim 6, wherein the maximum power point tracker is used to keep the voltage across the at least one photo voltaic array (5) constant.

8. A method of operating a controlling apparatus for a solar power generator (1), wherein said solar power generator (1) comprises a direction tracker controller (2) with at least one photo voltaic array (5) and an inverter (3), wherein said method comprises the following steps
- upon receiving a start request at the input of the inverter (3)
- measuring the current and/or the voltage and/or the power in the at least one photo voltaic array (5) and sending the voltage and/or current and/or the power measurements from the inverter (3) to the direction tracker controller (2)
- upon receiving a stop request at the input of the inverter (3), stopping the measurement.

9. The method according to claim 8, wherein the solar power generator (1) comprises a maximum power point tracker and wherein the maximum power point tracker is deactivated after receiving the start request and reactivated after receiving the stop request.

10. The method according to claim 8 or 9, wherein the input current from the at least one photo voltaic array (5) to the inverter (3) is short circuited after the start request has been received at the input of the inverter (3).

11. The method according to claim 8 or 9, wherein the voltage is kept constant across the at least one photo voltaic array (5) after the start request has been received at the input of the inverter (3).

12. The method according to any of claims 8 to 11, wherein the measurement of the current and/or the voltage and/or the power in the at least one photo voltaic array (5) and the sending of the measurements to the direction tracker controller (2) are repeated a pre-determined number of times before a stop request is sent to the inverter (3).

13. The method according to any of claims 8 to 12, wherein the direction tracker controller (2) can send a premature stop request to the inverter (3).

14. An inverter suitable for enabling the method according to any of the claims 8 to 13.

15. A solar power generator comprising a controlling apparatus according to any of claims 1 to 7.
